# EUROPÄISCHE PATENTSCHRIFT

(11) **EP 2 626 579 B1**
(45) Veröffentlichungstag und Bekanntmachung des Hinweises auf die Patenterteilung: **10.04.2019**
(21) Anmeldenummer: 13151402.8
(22) Anmeldetag: 16.01.2013
(51) Int. Cl.: B61C 9/38, F16D 3/62

(54) **Elastische Doppel-Torsionskupplung**
Elastic double torsional coupling
Couplage de torsion double élastique

(30) Priorität: 10.02.2012 DE 102012002660
(43) Veröffentlichungstag der Anmeldung: 14.08.2013
(60) Teilanmeldung: 14004001.5
(73) Patentinhaber: ZF Friedrichshafen AG, 88046 Friedrichshafen (DE); Süddeutsche Gelenkscheibenfabrik GmbH & Co. KG, 84478 Waldkraiburg (DE)
(72) Erfinder: Somschor, Bernd, 88069 Tettnang (DE); Sacher, Christoph, 88048 Friedrichshafen (DE); Huber, Armin, 84573 Schönberg (DE); Liessel, Roland, 84478 Waldkraiburg (DE)

(56) Entgegenhaltungen:
- EP-A1- 0 162 141
- WO-A1-2004/044451
- BE-A- 456 594
- DE-A1- 4 001 145
- DE-A1- 19 855 593
- FR-A- 1 120 269
- JP-A- S6 334 325
- US-A- 2 181 888
- US-A- 4 019 345
- US-A- 4 019 346
- US-A- 4 033 144

## Beschreibung

Die Erfindung betrifft ein Schienenfahrzeug gemäß dem Oberbegriff von Anspruch 1. Das Schienenfahrzeug umfasst eine elastische Doppel-Torsionskupplung mit
a) einer ersten Torsionskupplung, die ihrerseits aufweist:
   aa) einen ersten Verbindungsflansch zur Verbindung mit einer drehmomentenerzeugenden Kraftquelle;
   ab) eine Vielzahl von Laschen, die jeweils in einem Endbereich mit dem ersten Verbindungsflansch verbunden sind;
b) einer zweiten Torsionskupplung, die ihrerseits aufweist:
   ba) einen zweiten Verbindungsflansch zur Verbindung mit einer angetriebenen Welle oder dergleichen;
   bb) eine Vielzahl von Laschen, die jeweils in einem Endbereich mit dem zweiten Verbindungsflansch verbunden sind;
c) einem Zwischenstück, welches die erste Torsionskupplung mit der zweiten Torsionskupplung verbindet und mit dem jeweils der andere Endbereich der Laschen verbunden ist

Elastische, nicht schaltbare Torsionskupplungen werden zum Zwecke der Drehmomenten-übertragenden Verbindung zwischen zwei Wellenanschlüssen verbaut. Ihr Sinn besteht neben der Drehmomentenübertragung in der Schwingungsisolierung und akustischen Abkopplung der beiden Wellen voneinander. Elastische Torsionskupplungen sind beispielsweise in der DE 37 34 089 A1, der DE 43 042 74 C1 oder auch der DE 10 2008 047 596 A1 beschrieben.

Aus der US 2 181 888 A ist eine elastische Doppel-Torsionskupplung mit einer ersten und einer zweiten Torsionskupplung bekannt. Dabei weist die erste Torsionskupplung einen ersten Verbindungsflansch zur Verbindung mit einer drehmomentenerzeugenden Kraftquelle und eine Vielzahl von metallischen Laschen auf, die jeweils in einem Endbereich mit dem ersten Verbindungsflansch verbunden sind. Die zweite Torsionskupplung weist ihrerseits einen zweiten Verbindungsflansch zur Verbindung mit einer angetriebenen Welle und eine Vielzahl von metallischen Laschen auf, die jeweils in einem Endbereich mit dem zweiten Verbindungsflansch verbunden sind.

Ferner weist die Doppel-Torsionskupplung ein Zwischenstück auf, welches die erste Torsionskupplung mit der zweiten Torsionskupplung verbindet und mit dem jeweils der andere Endbereich der metallischen Laschen verbunden ist. Das Zwischenstück ist als in Axialrichtung flache Platte ausgebildet.

Ein bevorzugtes Einsatzgebiet von elastischen Doppel-Torsionskupplungen der eingangs genannten Art sind Schienenfahrzeuge. Dort werden zwei unterschiedliche Positionen unterschieden, in denen Kupplungen montiert werden. Die erste Position, die üblicherweise als "antriebsseitig" bezeichnet wird, ist die zwischen der Ausgangswelle des Elektromotors und der Eingangswelle des Getriebes. Die Drehzahlen der miteinander zu verbindenden Wellen sind an dieser Stelle sehr hoch und der zur Verfügung stehende Einbauraum ist verhältnismäßig knapp. Deshalb wurden hier bisher im Wesentlichen Bogenzahnkupplungen eingesetzt, die jedoch wartungsbedürftig sind, lange Montage- und Demontagezeiten erfordern und auf Grund ihrer Verzahnung in erheblichem Maße Geräusche entwickeln.

Die zweite Möglichkeit, Kupplungen in Schienenfahrzeugen zu positionieren, ist die zwischen der Ausgangswelle des Getriebes und dem angetriebenen Radwellensatz. Hier sind die Drehzahlen erheblich niedriger und es steht mehr Einbauraum zur Verfügung. Daher wurden an dieser Stelle schon bisher elastische Doppel-Torsionskupplungen der eingangs genannten Art eingesetzt. Sie zeichnen sich durch ein verhältnismäßig geringes Gewicht, weitgehende Wartungsfreiheit, längere Standzeiten, gute kardanische Steifigkeit und geringeren Kosten in der Anschaffung und bei den LCC aus.

Bei diesen bekannten Doppel-Torsionskupplungen ist das die beiden Einzel-Torsionskupplungen miteinander verbindende Zwischenstück ein Rohr, durch das sich die angetriebene Radsatzwelle hindurch erstreckt. Um den bei Fehlausrichtung der miteinander zu verbindenden Wellen eintretenden Beugewinkel nicht zu groß zu machen, haben diese rohrartigen Zwischenstücke eine nicht unerhebliche axiale Länge. Auf Grund ihrer Abmessungen wurden derartige Doppel-Torsionskupplungen bisher antriebsseitig nicht eingesetzt.

Aus der BE 456 594 A ist beispielsweise ein Schienenfahrzeug mit einer antriebsseitigen Doppel-Torsionskupplung bekannt, wobei die Doppel-Torsionskupplung ein Zwischenstück mit einer erheblichen axialen Länge aufweist.

Aufgabe der vorliegenden Erfindung ist es, ein Schienenfahrzeug mit einer verbesserten elastischen Doppel-Torsionskupplung im antriebsseitigen Einbau zu schaffen. Diese Aufgabe wird erfindungsgemäß durch ein Schienenfahrzeug mit einer elastischen Doppel-Torsionskupplung gemäß Anspruch 1 gelöst. Dabei ist das Zwischenstück als in Axialrichtung flache Platte ausgebildet.

Die Ausbildung des Zwischenstücks als flache Platte wirkt sich in doppelter Hinsicht günstig für den Einsatz als antriebsseitige Kupplung aus. Zum einen ist die Abmessung dieses Zwischenstücks in Axialrichtung vergleichsweise gering, so dass auch die gesamte Doppel-Torsionskupplung in dieser Richtung verhältnismäßig klein baut und in dem knappen zur Verfügung stehenden Raum zwischen Elektromotor und Getriebe untergebracht werden kann. Zum anderen besitzt das erfindungsgemäße Zwischenstück eine vergleichsweise kleine Masse, was die Probleme, die mit den hohen Drehzahlen verbunden sind, beispielsweise Unwuchten und die hiermit verbundenen Vibrationen und Geräusche, deutlich reduziert.

Ein besonders bevorzugtes Ausführungsbeispiel der Erfindung zeichnet sich dadurch aus, dass das Zwischenstück in Axialrichtung eine Abmessung aufweist, die der Abmessung der zusammenmontierten Laschen einer Torsionskupplung in axialer Richtung entspricht, derart, dass nach Entfernen des Zwischenstücks die zusammenmontierten Laschen einer Torsionskupplung durch den hierdurch entstehenden Freiraum entfernt werden können.

Die Montage und Demontage der bisher antriebsseitig verwendeten Bogenzahnkupplungen ist, wie eingangs schon erwähnt, außerordentlich aufwendig. Es müssen viele Teile entfernt werden, bevor die wartungsbedürftigen inneren Bauelemente zugänglich werden.

Bei der beschriebenen Bauweise dagegen gelingt die Entfernung der möglicherweise wartungs- und reparaturbedürftigen Komponenten, nämlich der Laschen, ohne aufwendige Demontage der vollständigen Torsionskupplungen. Es genügt, das Zwischenstück zwischen den beiden Torsionskupplungen herauszunehmen, um dann in den dadurch entstehenden Freiraum die zusammenmontierten Laschen einer Torsionskupplung einzuführen, die sodann in seitlicher Richtung entnommen werden können. Unter "zusammenmontiert" wird dabei das "Gerüst" von Laschen verstanden, wie es sich in der Torsionskupplung befindet. Reparaturen an der so ausgestalteten Doppel-Torsionskupplung erweisen sich als sehr viel einfacher als beim Stande der Technik und benötigen sehr viel kürzere Zeiten in der Werkstatt.

Der Gewichtsreduzierung dient auch diejenige Ausgestaltung der Erfindung, bei welcher das Zwischenstück eine Mehrzahl von radial verlaufenden Armen besitzt, in deren Endbereichen von gegenüberliegenden Seiten her die Laschen der beiden Torsionskupplungen befestigt sind. Der Begriff "Arm" bedeutet hier nicht notwendig einen sehr schmalen Bereich des Zwischenstückes. Auch die Ecken beispielsweise eines Dreieckes sind in diesem Sinne als "Arm" zu verstehen. Entscheidend ist, dass die Laschen an Bereichen des Zwischenstückes befestigt sind, die einen größeren radialen Abstand von der Achse besitzen als andere Bereiche, was bei einem vorgegebenen Bohrungskeisradius zu Einsparungen an Masse und damit Gewicht führt.

Eine Ausführungsform der Erfindung sieht vor, dass
a) der Verbindungsflansch der Torsionskupplungen einen nach innen zeigenden Nabenbereich aufweist;
b) jede Torsionskupplung einen mit der Lasche verbundenen Zwischenflansch aufweist, der sich an dem Nabenteil des Verbindungsflansches abstützt.

Damit hat es folgende Bewandtnis: Bei den hohen Drehzahlen, die bei antriebsseitigen Doppel-Torsionskupplungen auftreten, ist eine gute Zentrierung aller Bauteile zur Vermeidung von Unwuchten und hiermit verbundenen Geräuschen unerlässlich. Dieser Zentrierung dienen der in einer Ausführungsform vorgesehene Zwischenflansch und die Ausgestaltung des Nabenbereiches des Verbindungselementes. Die Bolzen, mit denen die Laschen mit einem Endbereich an dem Verbindungsflansch und mit dem anderen Endbereich an dem Zwischenstück befestigt sind, werden dadurch zwischen ihren beiden Enden noch einmal positioniert.

Auf dem Nabenbereich des Verbindungsflansches kann ein Ringteil mit einer balligen Außenfläche angeordnet sein, auf der sich der Zwischenflansch abstützt. Diese Maßnahme ist hilfreich bei der Bewältigung verhältnismäßig großer Beugewinkel, da dann der Verbindungsflansch auf der balligen Außenfläche wandern und seinen Winkel zur Achse des Verbindungsflansches den Gegebenheiten anpassen kann. Besonders bevorzugt wird eine Anordnung, bei welcher zwischen dem Zwischenflansch und dem nabenförmigen Bereich des Verbindungsflansches eine Drehverbindung in der Weise besteht, dass eine Verdrehung des Zwischenflansches gegenüber dem nabenförmigen Bereich um einen bestimmten Winkel möglich ist. Dieses eingeplante "Spiel" zwischen Zwischenflansch und nabenförmigem Bereich dient der Erzielung einer "Notlaufeigenschaft" der Torsionskupplung, falls eine oder mehrere Laschen in ihr brechen und der über die Laschen führende Kraftfluss unterbrochen sein sollte: Dann verdreht sich nämlich der Zwischenflansch gegenüber dem nabenförmigen Bereich des Verbindungsflansch so weit, wie dies möglich ist. Sodann findet eine Drehmitnahme zwischen den beiden Teilen durch direkten Kontakt statt, allerdings ohne die dämpfende Eigenschaft, die sonst Torsionskupplungen zu eigen ist.

Der Zwischenflansch ist bevorzugt zwischen benachbarten Laschen angeordnet. Auf diese Weise sind die freitragenden Abschnitte der die Laschen befestigenden Bolzen am kürzesten.

Eine Ausführungsform kann eine elastische Doppel-Torsionskupplung umfassen, bei welcher verhältnismäßig große Unterschiede in den axialen Abständen der miteinander zu verbindenden Wellen bewältigbar sind.

Dabei ist vorgesehen, dass das Zwischenstück auf gegenüberliegenden Seiten jeweils Aufnahmen mit einer achsparallelen Bohrung aufweist, in der jeweils ein Gleitstück in axialer Richtung beweglich angeordnet ist, wobei die die Laschen befestigenden Bolzen jeweils an einem Gleitstück befestigt sind. Auf diese Weise können die beiden Torsionskupplungen, die zusammen die Doppel-Torsionskupplung bilden, in gewissem Umfang in axialer Richtung näher zusammengeschoben oder weiter auseinander gezogen werden, wie dies eben die Dimensionen der in den Aufnahmen des Zwischenstückes teleskopierenden Gleitstücke zulassen.

Besonders günstig ist es in diesem Falle, wenn jeder Aufnahme eine Feder zugeordnet ist, welche das Gleitstück aus dem Zwischenstück zu drücken sucht. Diese Bauweise stellt eine zentrische Anordnung des Zwischenstückes zwischen den beiden Torsionskupplungen sicher.

Ausführungsbeispiele einer elastischen Doppel-Torsionskupplung werden nachfolgend anhand der Zeichnung näher erläutert; es zeigen:
- Figur 1:: perspektivisch eine elastische Doppel-Torsionskupplung, die bevorzugt zwischen der Ausgangswelle eines Elektromotors und einem Getriebe bei Schienenfahrzeugen angebracht wird;
- Figur 2:: die Draufsicht auf die Doppel-Torsionskupplung von Figur 1;
- Figur 3:: einen Schnitt gemäß Linie III-III von Figur 2;
- Figur 4:: einen Schnitt gemäß Linie IV-IV von Figur 2;
- Figuren 5 und 6:: Schnitte, ähnlich der Figur 3, durch alternative Ausführungsformen einer elastischen Doppel-Torsionskupplung.

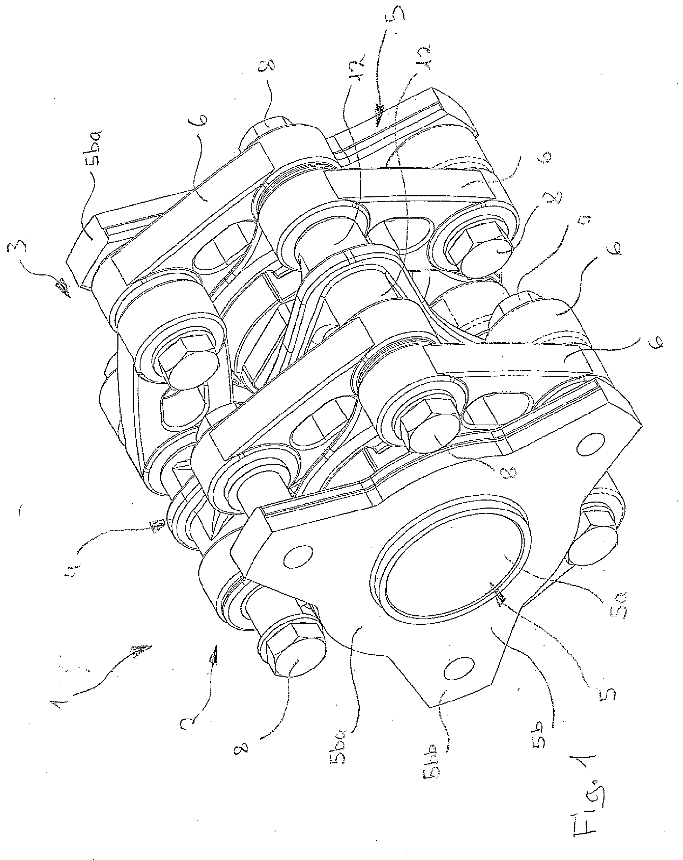

Zunächst wird auf die Figuren 1 bis 3 Bezug genommen, in denen ein erstes Ausführungsbeispiel einer elastischen Doppel-Torsionskupplung dargestellt und insgesamt mit dem Bezugszeichen 1 gekennzeichnet ist. Sie eignet sich insbesondere zum Einsatz bei Schienenfahrzeugen und zwar "antriebsseitig". Unter "antriebsseitig" wird eine Position zwischen der Ausgangswelle eines Elektromotors und der Eingangswelle eines Getriebes verstanden. Diese Bezeichnung steht im Gegensatz zu "abtriebsseitig", worunter eine Anordnung einer Kupplung gemeint ist, die sich zwischen der Ausgangswelle des Getriebes und der angetriebenen Radsatzwelle befindet.

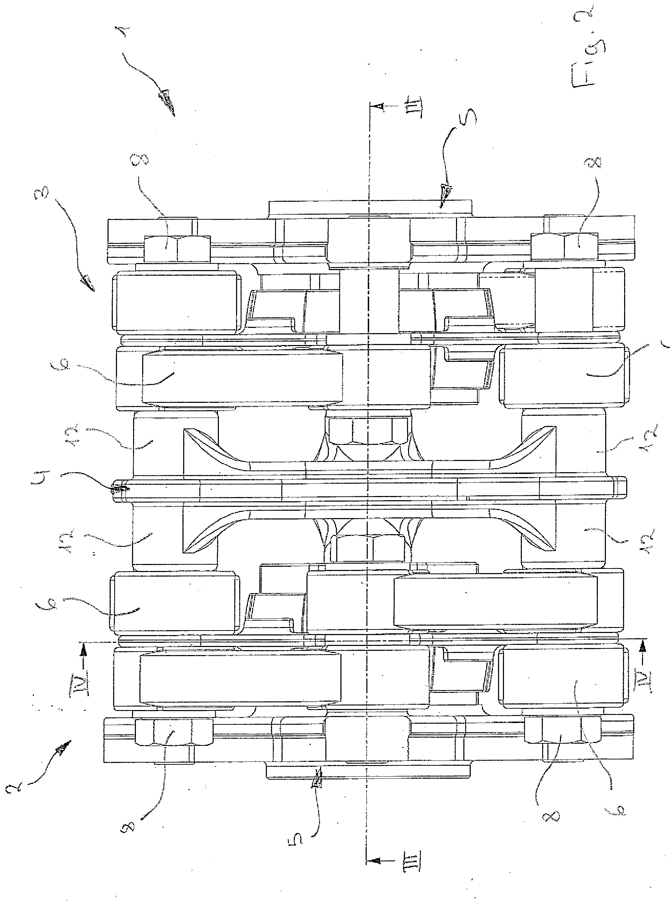

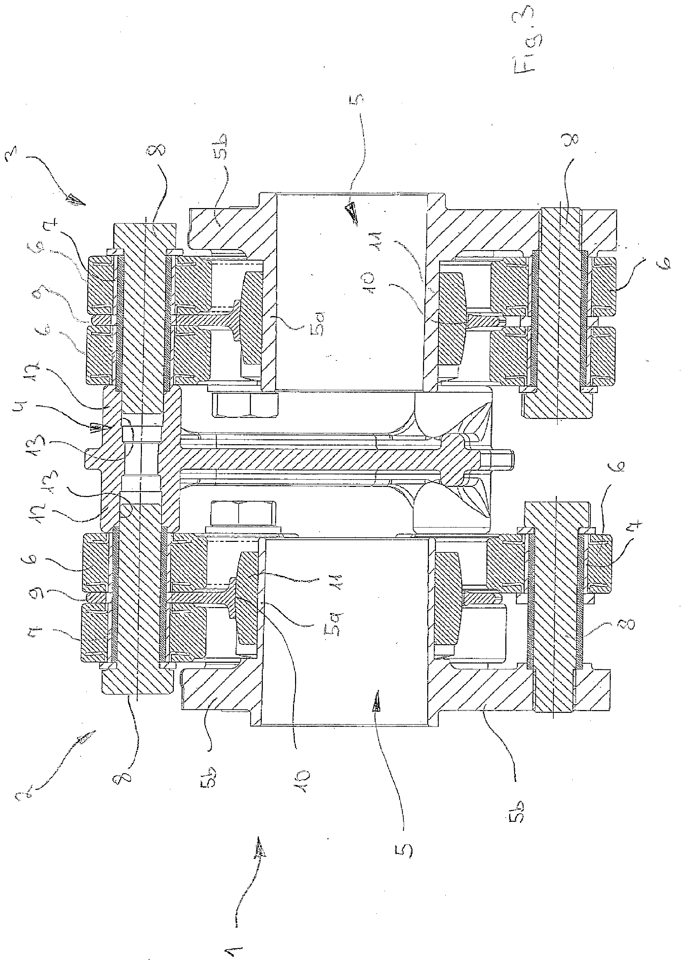

Die Doppel-Torsionskupplung 1, umfasst zwei im Wesentlichen identisch aufgebaute und spiegelbildlich zur Mittelebene der Doppel-Torsionskupplung 1 angeordnete Torsionskupplungen 2 und 3, die durch ein Zwischenstück 4 miteinander drehschlüssig verbunden sind. Die weitere Beschreibung erfolgt zunächst anhand der in den Figuren 2 und 3 links gezeichneten Torsionskupplung 2. Diese ist im Wesentlichen baugleich mit der in den Figuren 2 und 3 rechts dargestellten Torsionskupplung 3. Die Torsionskupplung 2 besitzt einen Verbindungsflansch 5 mit einer rohrförmigen Nabe 5a und einem radial verlaufenden Flanschbereich 5b. Dieser wiederum ist einstückig aus einem Kreisringbereich 5ba und drei sich von diesem radial nach außen erstreckenden Armen 5bb zusammengesetzt. Die Arme 5bb schließen miteinander einen Winkel von 120° ein.

An jedem der Arme 5bb sind zwei Laschen 6 mittels eines Bolzens 8 befestigt. Die Laschen 6 können grundsätzlich von jeder beliebigen Bauart sein, sofern sie nur die für die Dämpfung erforderlichen elastischen Eigenschaften besitzen. Bevorzugt werden jedoch solche Laschen 6, die einen elastomeren Körper umfassen, in welchen ein kräfteübertragendes Fadenpaket eingebettet ist. Die prinzipielle Bauweise einer derartigen Lasche 6 ist beispielsweise in der DE 35 26 273 C3 beschrieben, worauf Bezug genommen wird. Jede Lasche 6 besitzt zwei als Befestigungselemente dienende, von der einen zur anderen Stirnseite gehende Buchsen 7, die als Verschraubungspunkte dienen.

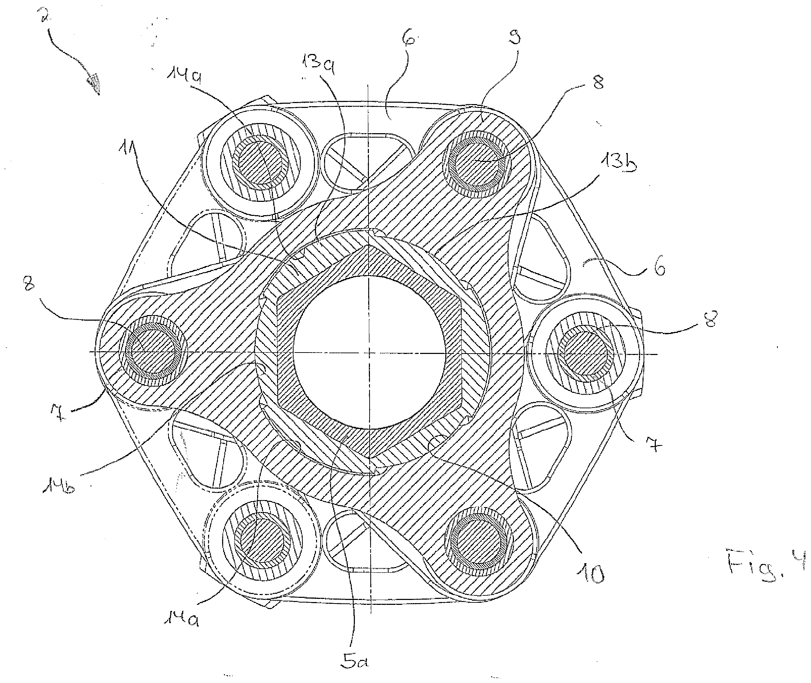

Im Einzelnen ist die Anordnung der Laschen 6 Folgende:
Beginnt man mit der Beschreibung an dem in Figur 4 rechts oben liegenden Bolzen 8, der dem Bolzen 8 links oben in Figur 3 entspricht, so erkennt man, dass durch diesen zwei Laschen 6 an dem Zwischenstück 4 befestigt sind, die sich in Umfangsrichtung in entgegengesetzte Richtungen erstrecken. Die gegenüberliegenden Endbereiche dieser Laschen 6 sind mit weiteren Bolzen 8, welche dem Bolzen 8 links unten in Figur 3 entsprechen, mit einem Arm 5bb des Verbindungsflansches 5 verbunden. Diese Folge von Laschen 6, die abwechselnd einen Arm 5bb des Verbindungsflansches 5 mit dem Zwischenstück 4 und umgekehrt verbinden, setzt sich über den gesamten Umfang der Torsionskupplung 2 fort. Die dargestellte Torsionskupplung 2 besitzt auf diese Weise insgesamt sechs solcher Laschen 6, die zusammen ein regelmäßiges Sechseck aufspannen, wobei an den Ecken des Sechseckes jeweils die Befestigungspunkte liegen.

Die beiden Laschen 6, die in einem dieser Befestigungspunkte nebeneinander liegen, werden durch einen schmalen Zwischenflansch 9 voneinander getrennt, der im radial innenliegenden Bereich eine Durchgangsöffnung 10 besitzt. Mit dem Rand dieser Durchgangsöffnung 10 liegt der Zwischenflansch 9 auf einer balligen Außenfläche eines Ringteiles 11 auf, das seinerseits auf dem in Richtung auf das Zwischenstück 4 weisenden, inneren Abschnitt der Nabe 5a des Verbindungsflansches 5 befestigt ist.

Das Zwischenstück 4 zwischen den beiden Torsionskupplungen 2 und 3 hat in der Seitenansicht die grobe Form eines Dreieckes, wobei die Ecken so positioniert sind, dass sie winkelmäßig gegenüber den Armen 5bb des Verbindungsflansches um 60° verdreht sind. Diese Verhältnisse werden besonders aus Figur 4 deutlich. Im Bereich dieser Ecken besitzt das Zwischenstück 4, das im Übrigen die Form einer schmalen Platte besitzt, jeweils zwei Aufnahmen 12. Die Aufnahmen 12 erstrecken sich von dem mittleren plattenförmigen Bereich des Zwischenstückes 4 in entgegengesetzte Richtungen auf die Torsionskupplungen 2, 3 zu und enthalten jeweils eine Gewindebohrung 13, in welche jeweils ein zwei Laschen 6 haltender Bolzen 8 eingeschraubt ist. Auf diese Weise wird also eine Drehverbindung zwischen den beiden Torsionskupplungen 2, 3 hergestellt.

Durch die achsparallele Dimension des Zwischenstückes 4 im Bereich der Aufnahmen 12 wird ein bestimmter Abstand zwischen den beiden Torsionskupplungen 2, 3 vorgegeben. Dieser wird so gewählt, dass die Laschensätze jeder Torsionskupplung 2, 3 zu Reparaturzwecken entnommen werden können, ohne dass die gesamte Torsionskupplung 2, 3 aus ihrem Einsatzort am Schienenfahrzeug demontiert werden müsste. Hierzu werden die Bolzen 8 so weit zurückgeschraubt, bis sie keinen Eingriff in die Gewindebohrungen 13 des Zwischenstückes 4 bzw. der Arme 5bb des Verbindungsflansches 5 mehr besitzen. Dann kann das Zwischenstück 4 seitlich herausgenommen werden. In den nunmehr freigewordenen Raum können die Laschensätze der beiden Torsionskupplungen 2, 3 nacheinander eingeführt und ebenfalls seitlich herausgenommen werden. Die reparierten oder erneuerten Laschensätze werden in umgekehrter Weise in die Torsionskupplungen 2, 3 wieder eingeführt. So dann wird das Zwischenstück 4 an seinen Platz gebracht und durch die Bolzen 8 dort gesichert.

In Figur 4 ist noch eine Besonderheit der beschriebenen Torsionskupplung 2 dargestellt. Sie zeigt einen Radialschnitt durch die Torsionskupplung 2 im Bereich des Zwischenflansches 9. Ausgehend von der Mitte erkennt man zunächst die Nabe 5a des Anschlussflansches 5, deren Aussenkontur im dargestellten Ausführungsbeispiel im Querschnitt sechseckig ist. Auf diese sechsflächige Nabe 5a ist mit einer komplementären Innenöffnung das Ringteil 11 aufgeschoben, an dem sich der Zwischenflansch 9, wie oben erläutert, abstützt.

Die Außenkontur des Ringteils 11 ist im Querschnitt nicht exakt kreisförmig, sondern setzt sich aus kreisbogenförmigen Abschnitten 13a mit größerem Radius und kreisbogenförmigen Abschnitten 13b mit kleinerem Radius zusammen. In ähnlicher Weise ist auch die Durchgangsöffnung 10 des Zwischenflansches 9 im Querschnitt nicht exakt kreisförmig, sondern setzt sich aus Abschnitten 14a mit kleinerem Radius und Abschnitten 14b mit größerem Radius zusammen. Wie Figur 4 deutlich macht, erstrecken sich die Abschnitte 13a des Ringteils 11, die im Querschnitt den größeren Radius aufweisen, in die Abschnitte 14a mit größerem Radius des Zwischenflansches 9 hinein.

Wären die Bogenlängen der Bereiche 13a und 14a identisch, würde auf diese Weise eine drehschlüssige Verbindung zwischen dem Zwischenflansch 9 und dem Ringteil 11 erhalten. Tatsächlich aber ist die Bogenlänge der Abschnitte 14a des Zwischenflansches 9 größer als die Bogenlänge der Abschnitte 13a des Ringteiles 11. Dies bedeutet, dass sich der Zwischenflansch 9 gegenüber der Nabe 5a aus einer dargestellten mittleren Position in beide Richtungen um einen gewissen, kleinen Winkel verdrehen kann.

Damit hat es folgende Bewandtnis: Solange die Kraftübertragung von dem Zwischenteil 4 auf den Verbindungsflansch 5 über die Laschen 6 erfolgt, diese also intakt sind, verdreht sich der Zwischenflansch 9 niemals so weit, bis der oben angesprochene Winkel, der auf die unterschiedlichen Bogenlängen der Abschnitte 13a, 14a zurückgeht, aufgebraucht ist. Die Elastizität der Laschen 6 kann in vollem Umfange für den gewünschten Dämpfungseffekt genutzt werden. Brechen nunmehr aber eine oder mehrere der Laschen 6, so verdreht sich der Zwischenflansche 9 gegenüber der Nabe 5a weiter, als dies bei intakten Laschen 6 möglich wäre. Im Verlauf dieser Verdrehung stoßen nunmehr die radial verlaufenden Stufen zwischen den Bereichen größeren und kleineren Durchmessers des Ringteiles 11 an den radial verlaufenden Stufen zwischen den Bereichen größeren und kleineren Durchmessers der Innenöffnung 10 des Zwischenflansches 9 an, und unterbinden eine weitere Verdrehung. Auf diese Weise ist trotz des Ausfalls der Laschen 6 eine Drehmomentenübertragung möglich, allerdings ohne den Dämpfungseffekt zu erzielen.

Die "normale" Funktionsweise der oben beschriebenen Doppel-Torsionskupplung 1 ist wie folgt:
Es sei angenommen, dass an den Verbindungsflansch 5 der Torsionskupplung 2 die Ausgangswelle des nicht dargestellten Elektromotors drehschlüssig angekoppelt ist. Der Verbindungsflansch 5 nimmt über die Arme 5bb und die Bolzen 8 die Laschen 6 in ihrer Drehbewegung mit. Da die Laschen 6 mit ihrem anderen Endbereich mit dem Zwischenstück 4 verbunden sind, wird auch dieses in Drehung versetzt. Diese Drehung überträgt sich auf die mit den Aufnahmen 12 des Zwischenstücks 4 verbundenen Laschen 6 der zweiten Torsionskupplung 3. Hierdurch werden alle Laschen 6 der Torsionskupplung 3 in Drehung versetzt, was sich schließlich wieder über die Bolzen 8 auf den Verbindungsflansch 5 der Torsionskupplung 3 überträgt.

Auf Grund der Abstützung der Zwischenflansche 9 auf den Ringteilen 11 bleiben die Befestigungspunkte der Laschengerüste auch bei hohen Drehzahlen korrekt positioniert. Beugewinkel, die beispielsweise durch einen Versatz der an der Torsionskupplung 2 angeschlossenen Welle und der an der Torsionskupplung 3 angeschlossenen Welle entstehen können, können durch die ballige Form des Ringteiles 11 gut aufgenommen werden, da der Rand der Innenöffnung 10 der Zwischenflansche 9 auf der balligen Außenfläche des Ringteiles 11 entsprechend gleiten kann.

Das Zwischenstück 4, welches ein rohrförmiges Verbindungsstück beim Stand der Technik ersetzt, baut nicht nur in Axialrichtung verhältnismäßig kurz, sondern besitzt auch ein vergleichsweise geringes Gewicht. Dies ist bei den hohen Drehzahlen, denen eine antriebsseitig eingebaute Torsionskupplung unterworfen ist, von besonderer Bedeutung.

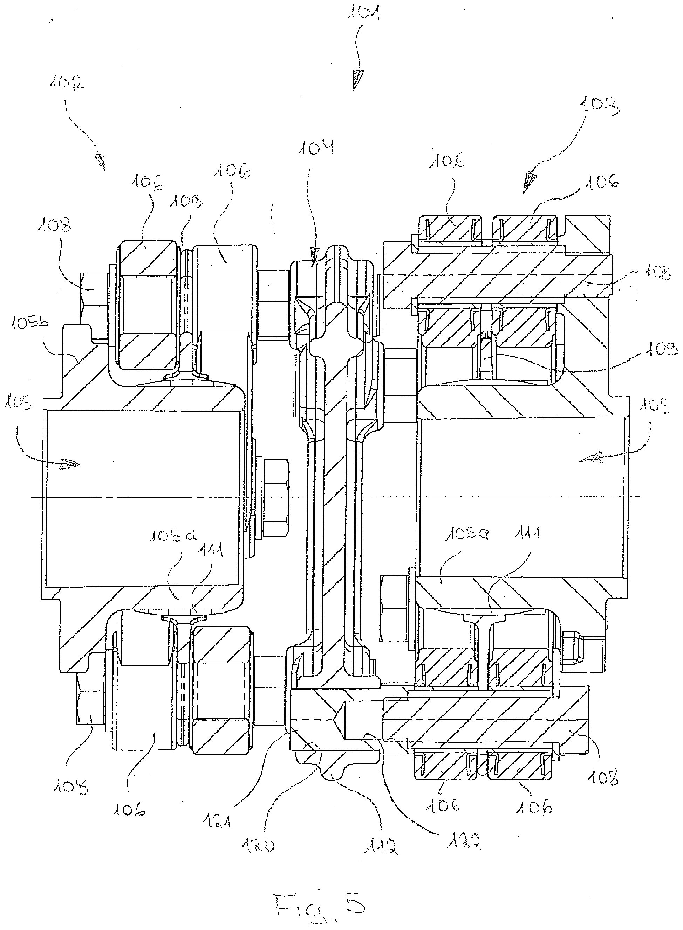

Das in Figur 5 dargestellte zweite Ausführungsbeispiel einer Doppel-Torsionskupplung ähnelt dem oben anhand der Figuren 1 bis 4 beschriebenen stark. Entsprechende Teile sind daher mit demselben Bezugszeichen zuzüglich 100 gekennzeichnet. Die nachfolgende Beschreibung beschränkt sich auf die Unterschiede zwischen den beiden Ausführungsbeispielen.

Anders als beim ersten Ausführungsbeispiel der Figuren 1 bis 4 befinden sich die Aufnahmen 112 des Zwischenstückes 104 nicht einander gegenüberliegend auf gegenüberliegenden Seiten des Zwischenstückes 104. In eine Durchgangsbohrung 120 jeder Aufnahme 112 ist ein kreiszylindrisches Gleitstück 121 eingeschoben, das seinerseits koaxial eine innere Gewindebohrung 122 aufweist. In diese Gewindebohrung 122 ist nun jeweils ein zwei Laschen 106 befestigender Bolzen 108 eingeschraubt.

Die beschriebene Art der Verbindung der beiden Torsionskupplungen 102, 103 macht es möglich, dass unterschiedliche Abstände der miteinander zu verbindenden Wellen in Axialrichtung in erheblichem Umfange kompensiert werden können: Je nach diesem Abstand tauchen die Gleitstücke 121 mehr oder weniger tief in die Durchgangsbohrungen 120 der Aufnahmen 112 des Zwischenstückes 104 ein. Im Übrigen verläuft die Übertragung von Drehmomenten von der einen Torsionskupplung 102 auf die andere Torsionskupplung 103 in der oben für das erste Ausführungsbeispiel schon beschriebenen Weise.

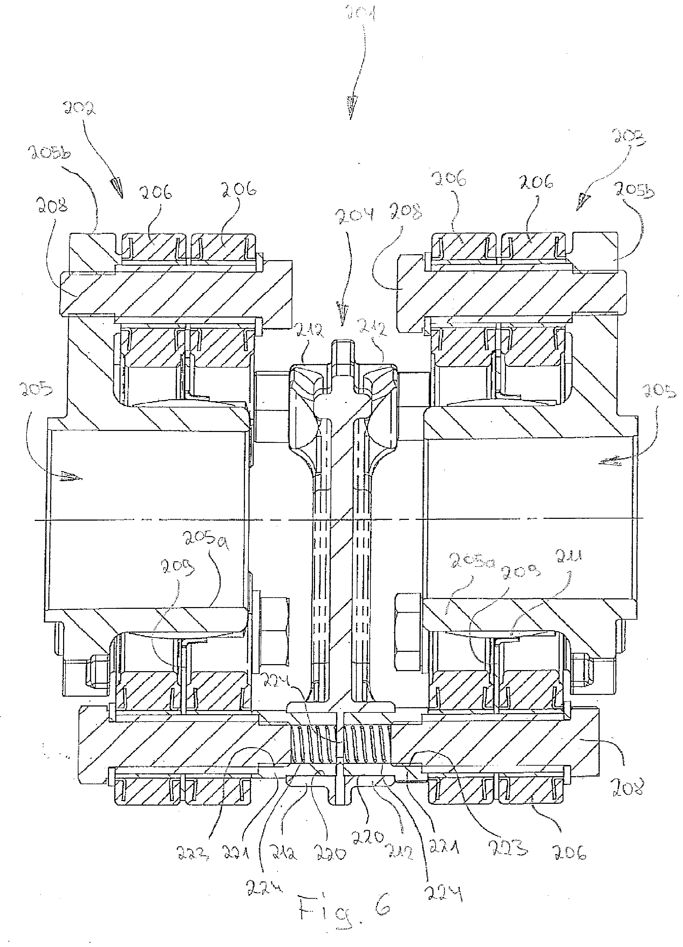

Figur 6 zeigt ein drittes Ausführungsbeispiel einer Doppel-Torsionskupplung, die erneut große Ähnlichkeit mit den oben schon beschriebenen Ausführungsformen besitzt. Teile, deren Funktion solchen des ersten Ausführungsbeispieles entsprechen, sind mit demselben Bezugszeichen zuzüglich 200 gekennzeichnet.

Das Zwischenstück 204, welches beim dritten Ausführungsbeispiel die Torsionskupplung 202 mit der Torsionskupplung 203 verbindet, stimmt insofern mit dem Zwischenstück 4 des ersten Ausführungsbeispieles überein, als diametral auf gegenüberliegenden Seiten des Zwischenstückes 4 Aufnahmen 212 vorgesehen sind. Jede dieser Aufnahmen 212 besitzt eine Sackbohrung 220, in welche jeweils ein hohlzylindrisches Gleitstück 221 eingeführt ist. In das Innengewinde 223 der Gleitstücke 221 sind von gegenüberliegenden Seiten her jeweils Bolzen 208 eingeschraubt, von denen jeder der Befestigung von zwei Laschen 206 dienen.

Zwischen einem Steg 224 des Zwischenstückes 204, der die beiden Sackbohrungen 220 der Aufnahmen 212 voneinander trennt, und der Stirnseite der Bolzen 208 ist jeweils eine Druckfeder 225 unter Vorspannung eingesetzt. Diese Druckfedern 224 suchen die Torsionskupplungen 202, 203 soweit wie möglich auseinander zu drücken und sorgen dafür, dass das Zwischenstück 204 mittig zwischen den Torsionskupplungen 202, 203 verbleibt. Das Ausführungsbeispiel der Figur 6 besitzt im Grundsatz dieselbe Möglichkeit, axiale Abstandsänderungen zwischen den Enden der miteinander zu verbindenen Wellen zu kompensieren, wie das Ausführungsbeispiel der Figur 5.

## Patentansprüche

1. Schienenfahrzeug mit einer Ausgangswelle einer als Elektromotor ausgebildeten drehmomenterzeugenden Kraftquelle und einer als Eingangswelle eines Getriebes ausgebildeten angetriebenen Welle, wobei zwischen dem Elektromotor und der angetriebenen Welle eine elastische Doppel-Torsionskupplung (1) vorgesehen ist, wobei die Doppel-Torsionskupplung (1) eine erste Torsionskupplung (2) und eine zweite Torsionskupplung (3) aufweist, wobei die erste Torsionskupplung (2) einen ersten Verbindungsflansch (5) aufweist, welcher mit der einer Ausgangswelle der einer drehmomenterzeugenden Kraftquelle verbunden ist, und eine Vielzahl von Laschen (6) aufweist, die jeweils in einem Endbereich mit dem ersten Verbindungsflansch (5) verbunden sind, wobei die zweite Torsionskupplung (3) einen zweiten Verbindungsflansch (5) aufweist, welcher mit der angetriebenen Welle verbunden ist, und eine Vielzahl von Laschen (6) aufweist, die jeweils in einem Endbereich mit dem zweiten Verbindungsflansch (5) verbunden sind, und wobei die Doppel-Torsionskupplung ein Zwischenstück (4) aufweist, welches die erste Torsionskupplung (2) mit der zweiten Torsionskupplung (3) verbindet und mit dem jeweils der andere Endbereich der Laschen (6) verbunden ist, **dadurch gekennzeichnet,**
**dass** das Zwischenstück (4) als in Axialrichtung flache Platte ausgebildet ist und dass die Laschen (6) einen elastomeren Körper umfassen, in welchen ein kräfteübertragendes Fadenpaket eingebettet ist.

## Claims

1. Rail vehicle having an output shaft of a torque-generating power source which is configured as an electric motor and a driven shaft which is configured as an input shaft of a transmission, an elastic double torsional coupling (1) being provided between the electric motor and the driven shaft, the double torsional coupling (1) having a first torsional coupling (2) and a second torsional coupling (3), the first torsional coupling (2) having a first connecting flange (5) which is connected to the output shaft of the torque-generating power source, and having a multiplicity of brackets (6) which are connected in each case in an end region to the first connecting flange (5), the second torsional coupling (3) having a second connecting flange (5) which is connected to the driven shaft, and having a multiplicity of brackets (6) which are connected in each case in an end region to the second connecting flange (5), and the double torsional coupling having an intermediate piece (4) which connects the first torsional coupling (2) to the second torsional coupling (3) and by way of which in each case the other end region of the brackets (6) is connected, **characterized in that** the intermediate piece (4) is configured as a plate which is flat in the axial direction, and **in that** the brackets (6) comprise an elastomeric body, in which a force-transmitting thread bundle is embedded.

## Revendications

1. Véhicule ferroviaire avec un arbre de sortie d'une source de force générant un couple, réalisée en tant que moteur électrique, et un arbre entraîné réalisé en tant qu'arbre d'entrée d'une transmission, un double accouplement élastique torsionnel (1) étant prévu entre le moteur électrique et l'arbre entraîné, le double accouplement torsionnel (1) présentant un premier accouplement torsionnel (2) et un deuxième accouplement torsionnel (3), le premier accouplement torsionnel (2) présentant une première bride de liaison (5) qui est reliée à l'arbre de sortie de la source de force générant un couple, et qui présente une pluralité d'attaches (6) qui sont chacune reliées à la première bride de liaison (5) dans une région d'extrémité, le deuxième accouplement torsionnel (3) présentant une deuxième bride de liaison (5) qui est reliée à l'arbre entraîné et présente une pluralité d'attaches (6) qui sont chacune reliées dans une région d'extrémité à la deuxième bride de liaison (5), et le double accouplement torsionnel présentant une pièce intermédiaire (4) qui relie le premier accouplement torsionnel (2) au deuxième accouplement torsionnel (3) et à laquelle est connectée à chaque fois l'autre région d'extrémité des attaches (6),
**caractérisé en ce que**
la pièce intermédiaire (4) est réalisée sous forme de plaque plate dans la direction axiale et **en ce que** les attaches (6) comprennent un corps élastomère dans lequel est noyé un paquet de fils transmettant les forces.
